# EUROPÄISCHE PATENTSCHRIFT

(11) **EP 2 640 607 B1**
(45) Veröffentlichungstag und Bekanntmachung des Hinweises auf die Patenterteilung: **27.08.2014**
(21) Anmeldenummer: 11805391.7
(22) Anmeldetag: 14.11.2011
(51) Int. Cl.: B60R 11/04

(54) **VORRICHTUNG MIT EINER KAMERAEINHEIT UND EINEM SCHUTZELEMENT, DAS EINE KOMPAKTE VERFAHRKURVE AUFWEIST**
DEVICE COMPRISING A CAMERA UNIT AND A PROTECTION ELEMENT WHICH HAS A COMPACT DISPLACEMENT PATH
DISPOSITIF COMPRENANT UN ENSEMBLE CAMÉRA ET UN ÉLÉMENT DE PROTECTION À COURBE DE DÉPLACEMENT COMPACTE

(30) Priorität: 16.11.2010 DE 102010060573
(43) Veröffentlichungstag der Anmeldung: 25.09.2013
(73) Patentinhaber: Huf Hülsbeck & Fürst GmbH & Co. KG, 42551 Velbert (DE)
(72) Erfinder: BARTHEL, Joachim, 45329 Essen (DE)
(86) Internationale Anmeldenummer: PCT/DE2011/075270
(87) Internationale Veröffentlichungsnummer: WO 2012/065603

(56) Entgegenhaltungen:
- EP-A2- 2 144 435
- DE-A1- 10 204 764
- DE-A1-102006 048 373
- DE-A1-102008 008 656

## Beschreibung

Die Erfindung betrifft eine Vorrichtung mit einer Kameraeinheit, die zur Bilderfassung des Außenbereiches des Kraftfahrzeuges dient, mit einem Antrieb, der zur Bewegung der Kameraeinheit zwischen einer Ruheposition und einer aktiven Position und zur Bewegung eines Schutzelementes zwischen einer Schließstellung und einer Offenstellung dient, wobei in der Schließstellung des Schutzelementes die Kameraeinheit sich in ihrer Ruheposition von außen unzugänglich hinter dem Schutzelement befindet und in der Offenstellung des Schutzelementes die Kameraeinheit sich in der aktiven Position zur Bilderfassung befindet.

Der Einsatz von Kameras bzw. einer Kameraeinheit zur Fahrzeugumfelderfassung ist bereits bekannt. Derartige Kameraeinheiten kommen beispielsweise als Einpark- und/oder Rangierhilfen bei Kraftfahrzeugen zum Einsatz, um insbesondere die mit den konventionellen Spiegeln des Kraftfahrzeugs nicht einsehbaren Bereiche um das Kraftfahrzeug herum zu erfassen.

In der DE 102010001108 ist eine Vorrichtung mit einer Kameraeinheit der oben genannten Art bereits beschrieben. Diese Vorrichtung zeichnet sich besonders durch ihre geringe Anzahl an Bauteilen aus, wobei gleichzeitig eine gute Funktionalität gewährleistet ist. Es hat sich nun gezeigt, dass Kameraeinheiten an Kraftfahrzeugen zur Bilderfassung gewünscht sind, die ein geringes Bauvolumen benötigen und gleichzeitig der Verfahrweg des Schutzelementes gering gehalten wird.

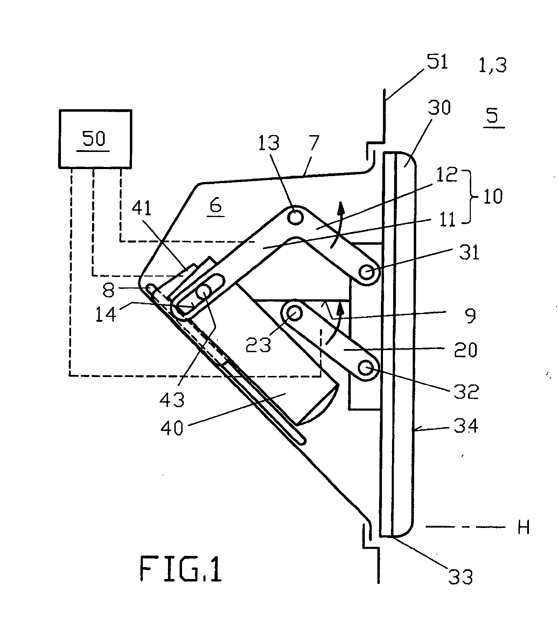

Der Stand der Technik nach DE-A-10 2006 048 373 zeigt eine Vorrichtung mit einer Kameraeinheit 10 , die zur Bilderfassung des Außenbereiches eines Kraftfahrzeuges dient, mit
einem Antrieb, der zur Bewegung der Kameraeinheit zwischen einer Ruheposition (Fig. 1) und einer aktiven Position (Fig. 3) und zur Bewegung eines Schutzelementes 20 zwischen einer Schließstellung und einer Offenstellung dient, wobei in der Schließstellung des Schutzelementes 20 die Kameraeinheit 10 sich in ihrer Ruheposition von außen unzugänglich hinter dem Schutzelement 20 befindet und in der Offenstellung des Schutzelementes 20 die Kameraeinheit 10 sich in der aktiven Position zur Bilderfassung befindet,
wobei ein Mechanismus mit einem Schwenkelement 31,35 und einem Hebelelement 22 vorgesehen ist, wobei
das Schwenkelement bewegbar um eine erste Drehachse 34 gelagert ist und einen ersten Arm 35 und einen zweiten Arm 31 aufweist,
das um eine zweite Drehachse 21 bewegbar gelagerte Hebelelement 22 mit dem Schutzelement 20 in Wirkverbindung steht und
der zweite Arm 31 zum ersten Arm 35 derart abgewinkelt ist, dass eine kompakte Verfahrkurve des Schutzelementes 20 zwischen seinen Stellungen erzielbar ist.

Aufgabe der vorliegenden Erfindung ist es daher, eine Vorrichtung mit einer Kameraeinheit zu schaffen, die kompakt gebaut ist und die Verfahrkurve des Schutzelementes zwischen seinen Stellungen möglichst nahe an der Kraftfahrzeugkarosserie liegt.

Zur Lösung dieser Aufgabe wird eine Vorrichtung mit allen Merkmalen des Anspruchs 1 vorgeschlagen. In den abhängigen Ansprüchen sind bevorzugte Weiterbildungen ausgeführt.

Erfindungsgemäß greift der erste Arm an der Kameraeinheit und der zweite Arm an dem Schutzelement an, wobei das um eine zweite Drehachse bewegbar gelagerte Hebelelement mit dem Schutzelement in Wirkverbindung steht, um die Bewegung des Schutzelementes zu unterstützen. Der besondere Vorteil dieser Erfindung ist, dass das abgewinkelte Schwenkelement dafür sorgt, dass zum einen zuverlässig die Kameraeinheit zwischen ihren Positionen bewegt werden kann und zum anderen die Verfahrkurve des Schutzelementes möglichst dicht an der Kraftfahrzeugkarosserie verläuft. Vorteilhafterweise ist die Außenfläche des Schutzelementes während der Bewegung des Schutzelementes zwischen seinen Stellungen stets gut sichtbar. Gleichzeitig dient das zum Schwenkelement beabstandete Hebelelement dazu, dass die Bewegung des Schutzelementes zwischen seinen Stellungen zuverlässig unterstützt wird, ohne dass beispielsweise das Schutzelement während seiner Bewegung sich ungewollt verdrehen, verkippen etc. kann. Insbesondere wird durch die vorliegende Erfindung bewirkt, dass nahezu in jeder Stellung des Schutzelementes das Schutzelement mehr oder weniger parallel zur anliegenden Fahrzeugkarosserie ausgerichtet ist. Der erfindungsgemäße Mechanismus ist derart ausgelegt, dass in jeder Position der Kameraeinheit bzw. in jeder Stellung des Schutzelementes eine gewisse Vorspannung des genannten Mechanismus vorliegt, wodurch die Schließstellung und die Offenstellung des Schutzelementes sicher gehalten werden kann.

Bei einer weiteren Ausführungsform der Erfindung kann der Mechanismus mit der Kameraeinheit innerhalb einer Einbuchtung eines Gehäuses sich befinden und/oder die Kameraeinheit kann eine Linearbewegung zwischen der Ruheposition und der aktiven Position, die auch als Betriebsposition bezeichnet werden kann, ausführen. In der Schließstellung des Schutzelementes ist der Mechanismus mit der Kameraeinheit zuverlässig in der Einbuchtung verschlossen, ohne dass die Gefahr besteht, dass Feuchtigkeit, Staub etc. eindringen können. Vorteilhafterweise weist das Schutzelement an seiner der Karosserie zugewandten Seite eine Dichtung auf, die unmittelbar in der Schließstellung des Schutzelementes an der Karosserie und/oder am Gehäuse der erfindungsgemäßen Vorrichtung anliegt, wodurch die Einbuchtung des Gehäuses wirkungsfrei vor Außeneinflüssen geschützt ist.

Ebenfalls ist es denkbar, dass das Gehäuse innerhalb der Einbuchtung eine Führung aufweist, in der die Kameraeinheit verschiebbar gelagert ist, insbesondere die Kameraeinheit ein Schlittenelement aufweist, das in der Führung beweglich aufgenommen ist. Während nun die Kameraeinheit zwischen der Ruheposition und der aktiven Position über den Antrieb bewegt wird, sorgt die Führung in der Einbuchtung dafür, dass eine zufriedenstellende Bewegung ohne erhebliche Geräuschentwicklungen der Kameraeinheit möglich ist. In einer möglichen Ausführungsform der Erfindung ist das Schlittenelement mit der Kameraeinheit fest verbunden, wobei das Schlittenelement gleichzeitig in die Führung eingreift. Das Schlittenelement trägt somit die Kameraeinheit während ihrer Bewegung zwischen der Ruheposition und der aktiven Position. Es hat sich gezeigt, dass durch die Verwendung des Schlittenelementes die Kameraeinheit vereinfacht mit der Führung innerhalb der Einbuchtung verbunden werden kann. Darüber hinaus begünstigt das Schlittenelement eine geräuscharme Bewegung der Kameraeinheit zwischen ihren Positionen.

Gemäß einer weiteren bevorzugten Weiterentwicklung der Erfindung können der zweite Arm des Schwenkelementes und das Hebelelement nahezu gleich ausgerichtet sein. Bevorzugt können der zweite Arm des Schwenkelementes und das Hebelelement zueinander nahezu parallel ausgerichtet sein. Diese geometrische Ausgestaltung des Mechanismus begünstigt eine kompakte Gesamtkonstruktion der erfindungsgemäßen Vorrichtung.

Damit eine zufriedenstellende Bilderfassung des Außenbereiches des Kraftfahrzeuges erfolgen kann, ist vorteilhafterweise die Führung innerhalb der Einbuchtung zur Horizontalen 30° bis 50° geneigt.

Bevorzugt kann mindestens ein Sensorelement vorgesehen sein, das beide Positionen der Kameraeinheit erkennen kann. Hierbei sind unterschiedliche Sensortypen denkbar, beispielsweise resistive Sensoren, induktive Sensoren, Magnetfeldsensoren, kapazitive Sensoren, piezoelektrische Sensoren oder optoelektronische Sensoren. Das Sensorelement kann beispielsweise in der Einbuchtung, in der Führung, an der Kameraeinheit, am Hebelelement, am Schutzelement, am Schwenkelement etc. angeordnet sein und/oder die Positionen der soeben genannten Elemente der erfindungsgemäßen Vorrichtung ermitteln, um anschließend auf die Position der Kameraeinheit zu schließen. Befindet sich beispielsweise die Kameraeinheit in ihrer Ruheposition oder in ihrer aktiven Position erkennt dies das Sensorelement, wodurch ein Signal an den Antrieb übermittelt wird, der beispielsweise deaktiviert wird.

Um eine gute Bilderfassung des Außenbereiches des Kraftfahrzeuges zu bewirken, kann der untere Bereich des Schutzelementes in der Offenposition derart positioniert sein, dass von der Mittelachse der Kameraeinheit bis zum genannten Randbereich ein Erfassungswinkel α vorliegt, der bis zu 40°, vorzugsweise bis zu 50° beträgt. Der Mechanismus ist derart ausgestaltet, dass neben dem sehr kompakten Verfahrweg des Schutzelementes das Schutzelement entsprechend weit weg von der aktiven Position der Kameraeinheit verschwenkt wird, damit der Außenbereich großflächig erfasst werden kann.

In einer bevorzugten Ausführungsform der Erfindung kann der zweite Arm des Schwenkelementes kürzer als der erste Arm ausgeführt sein. Zudem ist es alternativ oder zusätzlich denkbar, dass der erste Arm und der zweite Arm ein gemeinsames monolithisches Bauteil bilden. Der erste Arm und der zweite Arm stehen in einem definierten Winkel zueinander und bilden vorzugsweise eine bumerangartige Grundform oder einen L-förmigen Grundkörper, der zwischen dem ersten Arm und dem zweiten Arm um die erste Drehachse innerhalb der Einbuchtung des Gehäuses drehbar gelagert ist.

Gemäß einer weiteren bevorzugten Weiterbildung der Erfindung weist das Schwenkelement einen ersten Angriffspunkt am Schutzelement auf. Das Hebelelement kann gleichzeitig einen zweiten Angriffspunkt am Schutzelement aufweisen. Ferner entspricht der Abstand zwischen der ersten Drehachse und der zweiten Drehachse nahezu dem Abstand zwischen dem ersten Angriffspunkt und dem zweiten Angriffspunkt. Während der Bewegung des Schutzelementes können sich somit der zweite Arm des Schwenkelementes sowie das Hebelelement synchron zueinander bewegen, wodurch eine leichtgängige Gesamtbewegung des Mechanismus geschaffen wird.

Vorteilhafterweise weist das Gehäuse einen Anschlag auf, den das Hebelement und/oder das Schwenkelement in der aktiven Position und/oder in der Ruheposition der Kameraeinheit kontaktiert. Somit ist die Stellung des Schwenkelementes sowie des Hebelelementes in der aktiven Position und/oder der Ruheposition der Kameraeinheit fest definiert. Wird der Anschlag kontaktiert, erfolgt eine entsprechende Rückmeldung an den Antrieb.

Bevorzugt ist der Mechanismus derart ausgeführt ist, dass in der Offenstellung des Schutzelementes der Abstand zwischen dem Schutzelement und der Karosserie kleiner ist als der Verfahrweg des Schutzelementes, den das Schutzelement während der Bewegung von der Schließstellung in die Offenstellung senkrecht zur Horizontalen ausführt. Hierdurch wird bezweckt, dass das Schutzelement in der Offenstellung immer noch möglichst dicht an der Karosserie sich befindet und gleichzeitig nicht in den Erfassungsbereich der Kameraeinheit zur Bilderfassung sich erstreckt.

Zweckmäßigerweise kann der Mechanismus selbsthemmend ausgeführt sein, so dass trotz über eine potentielle Kraftbeaufschlagung auf das Schutzelement eine Bewegung des Schwenkelementes und/oder des Hebelelementes blockiert ist. Das bedeutet, dass die Vorrichtung derart ausgebildet ist, dass das Schwenkelement sowie das Hebelelement mit dem Schutzelement derart in Wirkverbindung stehen, dass in der Schließstellung und/oder Offenstellung des Schutzelementes eine Bewegung des Schutzelementes durch Einwirkung einer von außen manuell ausgeübten Kraft auf das Schutzelement nicht möglich ist. Die Offenstellung sowie die Schließstellung des Schutzelementes stellen definierte stabile Positionen dar, die durch den Mechanismus vorgegeben sind.

Denkbar ist, dass der Antrieb am Mechanismus angreift, wobei der Antrieb ein Linearantrieb und/oder ein Rotationsantrieb ist. Der Antrieb kann beispielsweise am Schwenkelement oder am Hebelelement oder sogar an der Kameraeinheit angreifen. Der Antrieb kann beispielsweise einen Stellantrieb aufweisen, der auf das Schwenkelement oder auf das Hebelelement wirkt. Beispielsweise kann das Hebelelement oder das Schwenkelement über eine lineare Hubbewegung des Stellantriebs um seine jeweilige Achse verschwenkt werden. Der Antrieb kann ferner einen Motor, insbesondere einen Elektromotor aufweisen bzw. als ein Motor, insbesondere als ein Elektromotor ausgebildet sein. Vorteilhafterweise kann auch der Motor selbsthemmend ausgeführt sein, so dass eine manuelle Bewegung des über das Schwenkelement oder das Hebelelement mit dem Motor verbundenen Schutzelementes nicht möglich ist. D.h., wird beispielsweise an dem Schutzelement gezogen, verhindert der selbsthemmend ausgebildete Motor die Bewegung des Schutzelementes und damit auch die Bewegung der Kameraeinheit. Somit stellt ein selbsthemmend ausgebildeter Motor sowie auch der selbsthemmend ausgeführte Mechanismus einen wirksamen Diebstahlschutz bezogen auf die Kameraeinheit dar.

Der Antrieb kann auch als Rotationsantrieb ausgeführt sein, der über eine Kurbel wahlweise im Uhrzeigersinn oder entgegen dem Uhrzeigersinn drehen kann. Die Kurbel kann auf das Schwenkelement oder auf das Hebelelement wirken, so dass über die Bewegung der Kurbel eine Drehbewegung des Schwenkelementes oder des Hebelelementes erzielbar ist, welches in der DE 102010001108.8 gezeigt ist.

Bevorzugt kann das Schutzelement außenseitig ein Designelement und/oder ein Emblem aufweisen. Ein Emblem im Sinne der Erfindung ist insbesondere ein Kennzeichen für eine Kraftfahrzeugmarke, insbesondere eine Automobilmarke. Dabei kann das Emblem zweidimensional oder dreidimensional ausgebildet sein.

Der Erfindungsgedanke der Erfindung bezieht sich auf ein Kraftfahrzeug, das als ein Lastkraftwagen oder ein Personenkraftwagen ausgebildet sein kann. Das Kraftfahrzeug kann ferner ein Boot bzw. ein Schiff sein. Ebenso ist es denkbar, dass das Kraftfahrzeug als ein Nutzfahrzeug, wie beispielsweise ein Bagger, eine Raupe, ein Kran etc. ausgebildet ist. Insbesondere vorteilhaft ist, wenn das Kraftfahrzeug zwei oder mehrere derartige Vorrichtungen aufweist. Dabei können mehrere Vorrichtungen derart miteinander gekoppelt sein, dass sie parallel zueinander betrieben werden können. Die Vorrichtung kann ferner einen Mechanismus aufweisen, der mindestens zwei voneinander beabstandete Schwenkelemente und/oder mindestens zwei Hebelelemente, die voneinander beabstandet sind, aufweist, wobei jedes Schwenkelement und/oder Hebelelement entsprechend am Schutzelement angreift.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Seitenansicht auf eine erfindungsgemäße Vorrichtung für ein Kraftfahrzeug, bei der die Kameraeinheit in der Ruheposition sich befindet und
- Fig. 2: die gemäß Fig. 1 gezeigte Vorrichtung, wobei die Kameraeinheit sich in der aktiven Position befindet.

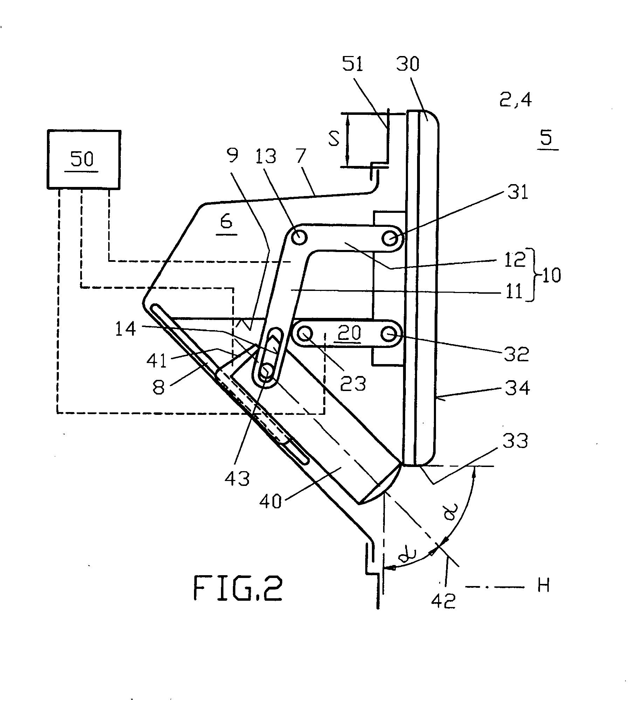

Elemente mit gleicher Funktion und Wirkungsweise sind in den Fig. 1 und 2 jeweils mit demselben Bezugszeichen versehen.

Fig. 1 zeigt eine Seitenansicht einer Ausführungsvariante der Vorrichtung für ein Kraftfahrzeug mit einer bewegbar gelagerten Kameraeinheit 40, die nach dem erfindungsgemäßen Konstruktionsprinzip ausgebildet ist, wobei sich die Kameraeinheit 40 in einer Ruheposition 3 befindet. Hierbei dient die Kameraeinheit 40 zur Bilderfassung des Außenbereiches 5 des Kraftfahrzeuges. Die Kameraeinheit 40 kann mit einem Mechanismus, auf den noch im Folgenden eingegangen wird, zwischen der Ruheposition 3 und einer aktiven Position 4, die in Fig. 2 gezeigt ist, bewegt werden. In der Ruheposition 3 befindet sich die Kameraeinheit 40 geschützt innerhalb einer Einbuchtung 6 eines Gehäuses 7, wobei ein Schutzelement 30 zuverlässig die Einbuchtung 6 verschließt. Das Schutzelement 30 ist eine Art Deckel, der die Kameraeinheit 40 vor Umwelteinflüssen wie Sonneneinstrahlung, Regen, Schmutz, Staub etc. aber auch vor einem möglichen Diebstahl schützt.

Um die Kameraeinheit 40 entsprechend zu bewegen, ist ein rein schematisch dargestellter Antrieb 50 vorgesehen, der auf den Mechanismus, insbesondere auf ein Schwenkelement 10 und/oder auf ein Hebelelement 20 wirken kann. Das Schwenkelement 10 ist innerhalb der Einbuchtung 6 bewegbar um eine erste Drehachse 13 gelagert. Hierbei weist das Schwenkelement 10 einen ersten Arm 11 und einen zweiten Arm 12 auf. Der erste Arm 11 greift an der Kameraeinheit 40 an. Der zweite Arm 12 des Schwenkelementes 10 greift am Schutzelement 30 an. Das Hebelelement 20 ist um eine zweite Drehachse 23 bewegbar gelagert, wobei das Hebelelement 20 mit dem Schutzelement 30 in Wirkverbindung steht. Der zweite Arm 12 ist zum ersten Arm 11 abgewinkelt.

Das Gehäuse 7 weist innerhalb der Einbuchtung 6 eine Führung 8 auf, entlang dieser die Kameraeinheit 40 linear verschiebbar gelagert ist. Wie in Fig. 1 und in Fig. 2 deutlich zu erkennen ist, ist ein Schlittenelement 41 vorgesehen, welches zum einen an der Kameraeinheit 40 befestigt ist und zum anderen in der Führung 8 beweglich aufgenommen ist. Das Schlittenelement 41 dient dazu, dass eine leichtgängige Bewegung der Kameraeinheit 40 innerhalb der Einbuchtung 6 erzielbar ist.

Wie in Fig. 1 und in Fig. 2 zu erkennen ist, ist gemäß dem gezeigten Ausführungsbeispiel der zweite Arm 12 kürzer als der erste Arm 11 ausgeführt, wobei beide Arme 11, 12 ein gemeinsames monolithisches Bauteil 11, 12 bilden. Zudem ist der zweite Arm 12 des Schwenkelementes 10 nahezu parallel zum Hebelelement 20 ausgerichtet, wobei die parallele Ausrichtung sich sowohl auf die Fig. 1 als auch auf die Fig. 2 bezieht.

Das Schwenkelement 10 weist einen ersten Angriffspunkt 31 am Schutzelement 30 auf. Das Hebelelement 20 weist einen zweiten Angriffspunkt 32 am Schutzelement 30 auf. Beide Angriffspunkte 31, 32 befinden sich innenseitig, im nicht sichtbaren Bereich des Schutzelementes 30.

Das Gehäuse 7 weist einen innerhalb der Einbuchtung 6 vorgesehenen Anschlag 9 auf, den das Hebelelement 20 in der Offenstellung 2 des Schutzelementes 30 kontaktiert, welches in Fig. 2 gezeigt ist. In Fig. 1 ist das Hebelelement 20 beabstandet zum Anschlag 9. Alternativ kann der Anschlag 9 an einer weiteren Stelle innerhalb des Gehäuses 7 angeordnet sein. Beispielsweise kann ein Anschlag für das Schwenkelement 10 vorgesehen sein, bei dem das Schwenkelement 10 in der aktiven Position 4 der Kameraeinheit 40 den Anschlag berührt. Ebenfalls ist es denkbar, dass ein weiterer Anschlag vorgesehen ist, der von einem Bauteil des Mechanismus oder von der Kameraeinheit 40 kontaktiert wird, wenn die Kameraeinheit 40 ihre Ruheposition 3 und/oder ihre aktive Position erreicht.

Der erste Arm 11 des Schwenkelementes 10 weist ein Langloch 14 auf, an dem die Kameraeinheit 40 gelagert ist. Außenseitig am Schutzelement 30 ist ein Emblem 34 vorgesehen, das im vorliegenden Ausführungsbeispiel die Marke des Kraftfahrzeuges wiedergibt.

Soll nun ausgehend von Fig. 1 eine Bilderfassung des Außenbereiches 5 des Kraftfahrzeuges erfolgen, treibt der Antrieb 50 mindestens ein Element 10, 20 des Mechanismus an oder sogar direkt die Kameraeinheit 40. Bei dem Antrieb 50 kann es sich beispielsweise um einen Linearantrieb oder einen rotatorischen Antrieb handeln, worauf im Folgenden jedoch nicht eingegangen wird.

Ausgehend von Fig. 1 erfolgt eine gleichzeitige Drehung des Schwenkelementes 10 sowie des Hebelelementes 20 gegen den Uhrzeigersinn. Hierbei dreht sich das Schwenkelement 10 um die Achse 13 und das Hebelelement 20 um die Achse 23. Die Kameraeinheit 40 verfährt gleichzeitig entlang der Führung 8 in Richtung Außenbereich 5, bis die Kameraeinheit 40 ihre aktive Position 4 erreicht hat (siehe Fig. 2). Während die Kameraeinheit 40 entlang der Führung 8 sich bewegt, bewegt sich der Nocken 43 der Kameraeinheit 40 entlang des Langloches 14 des ersten Armes 11 des Schwenkelementes 10. Wie in Fig. 2 zu erkennen ist, ist der untere Bereich 33 des Schutzelementes 30 in der Offenstellung 2 derart positioniert, dass von der Mittelachse 42 der Kameraeinheit 40 bis zum genannten Randbereich 33 ein Erfassungswinkel α der Kameraeinheit 40 vorliegt, der ca. 45° beträgt. Hierdurch kann eine zufriedenstellende Bilderfassung des Außenbereiches 5 des Kraftfahrzeuges erfolgen. Damit der Bodenbereich außerhalb des Kraftfahrzeuges ebenfalls gut von der Kameraeinheit 40 erfasst werden kann, ist die Führung 8 sowie die Mittelachse 42 der Kameraeinheit 40 zur Horizontalen H ungefähr α = 45° geneigt.

Im gezeigten Ausführungsbeispiel entspricht ungefähr der Abstand zwischen der ersten Drehachse 13 und der zweiten Drehachse 23 nahezu dem Abstand zwischen dem ersten Angriffspunkt 31 und dem zweiten Angriffspunkt 32. Zudem ist der Mechanismus derart ausgeführt, dass während der Bewegung der Kameraeinheit 40 gleichzeitig eine kompakte Verfahrkurve des Schutzelementes 30 erzielt wird. Hierbei ist der Abstand zwischen dem Schutzelement 30 und der Karosserie (in der Offenstellung 2 des Schutzelementes 30) kleiner als der Verfahrweg S des Schutzelementes 30, den das Schutzelement 30 während der Bewegung von der Schließstellung 1 in die Offenstellung 2 senkrecht zur Horizontalen H ausführt.

Der Mechanismus mit Schwenkelement 10 und Hebelement 20 und/oder der Antrieb 50 können selbsthemmend ausgeführt sein, so dass trotz über eine potenzielle, unberechtigte Kraftbeaufschlagung auf das Schutzelement 30 eine Bewegung des Schwenkelementes 10 und/oder des Hebelementes 20 und/oder der Kameraeinheit 40 blockiert ist.

Um die Positionen 3, 4 und/oder die Stellungen 1, 2 zu erfassen, kann mindestens ein Sensorelement vorgesehen sein, welches nicht explizit dargestellt ist.

Wie in Fig. 1 und in Fig. 2 dargestellt ist, sind das Schwenkelement 10 und das Hebelelement 20 voneinander beabstandet, wobei lediglich das Schwenkelement 10 direkt in Wirkverbindung mit der Kameraeinheit 40 ist. Jedoch sowohl in der Ruheposition 3 als auch in der aktiven Position 4 der Kameraeinheit 40 liegt eine stabile Lage der Kameraeinheit 40 bzw. des Schutzelementes 30 vor. In der Schließstellung 1 des Schutzelementes 30 kann das Schutzelement 30 von außen nicht manuell bewegt werden, wodurch ein wirksamer Diebstahlschutz der Kameraeinheit 40 gewährleistet ist.

Die in Fig. 1 und Fig. 2 gezeigte Vorrichtung kann beispielsweise an einem Kofferraumdeckel oder in einem hinteren oder vorderem Bereich des Kraftfahrzeuges angeordnet sein, um insbesondere den hinteren oder vorderen Außenbereich des Kraftfahrzeuges für den Fahrer besser zu erfassen. Diese Bilderfassung kann beispielsweise in der Fahrgastzelle vom Fahrer über ein Display visualisiert werden.

### Bezugszeichenliste

- 1: Schließstellung
- 2: Offenstellung
- 3: Ruheposition
- 4: aktive Position
- 5: Außenbereich
- 6: Einbuchtung
- 7: Gehäuse
- 8: Führung
- 9: Anschlag

- 10: Schwenkelement
- 11: erster Arm
- 12: zweiter Arm
- 13: erste Drehachse
- 14: Langloch

- 20: Hebelelement
- 23: zweite Drehachse

- 30: Schutzelement
- 31: erster Angriffspunkt
- 32: zweiter Angriffspunkt
- 33: unterer Randbereich
- 34: Emblem

- 40: Kameraeinheit
- 41: Schlittenelement
- 42: Mittelachse
- 43: Nocken

- 50: Antrieb
- 51: Karosserie

- H: Horizontale
- S: Verfahrweg

## Patentansprüche

1. Vorrichtung mit einer Kameraeinheit (40), die zur Bilderfassung des Außenbereiches (5) eines Kraftfahrzeuges dient, mit
einem Antrieb (50), der zur Bewegung der Kameraeinheit (40) zwischen einer Ruheposition (3) und einer aktiven Position (4) und zur Bewegung eines Schutzelementes (30) zwischen einer Schließstellung (1) und einer Offenstellung (2) dient, wobei
in der Schließstellung (1) des Schutzelementes (30) die Kameraeinheit (40) sich in ihrer Ruheposition (3) von außen unzugänglich hinter dem Schutzelement (30) befindet und in der Offenstellung (2) des Schutzelementes (30) die Kameraeinheit (40) sich in der aktiven Position (4) zur Bilderfassung befindet, wobei
ein Mechanismus mit einem Schwenkelement (10) und einem Hebelelement (20) vorgesehen ist,
das Schwenkelement (10) bewegbar um eine erste Drehachse (13) gelagert ist und einen ersten Arm (11) und einen zweiten Arm (12) aufweist,
der erste Arm (11) an der Kameraeinheit (40) und der zweite Arm (12) an dem Schutzelement (30) angreift,
das um eine zweite Drehachse (23) bewegbar gelagerte Hebelelement (20) mit dem Schutzelement (30) in Wirkverbindung steht, um die Bewegung des Schutzelementes (30) zu unterstützen, und wobei
der zweite Arm (12) zum ersten Arm (11) derart abgewinkelt ist, dass eine kompakte Verfahrkurve des Schutzelementes (30) zwischen seinen Stellungen (1, 2) erzielbar ist.

2. Vorrichtung nach Anspruch 1,
**dadurch gekennzeichnet,**
**dass** der Mechanismus mit der Kameraeinheit (40) innerhalb einer Einbuchtung (6) eines Gehäuses (7) sich befindet und/oder die Kameraeinheit (40) eine Linearbewegung zwischen der Ruheposition (3) und der aktiven Position (4) ausführt.

3. Vorrichtung nach Anspruch 2,
**dadurch gekennzeichnet,**
**dass** das Gehäuse (7) innerhalb der Einbuchtung (6) eine Führung (8) aufweist, in der die Kameraeinheit (40) verschiebbar gelagert ist, insbesondere die Kameraeinheit (40) ein Schlittenelement (41) aufweist, das in der Führung (8) beweglich aufgenommen ist.

4. Vorrichtung nach einem der vorhergehenden Ansprüche,
**dadurch gekennzeichnet,**
**dass** der zweite Arm (12) und das Hebelelement (20) nahezu gleich ausgerichtet sind, insbesondere der zweite Arm (12) und das Hebelelement (20) nahezu parallel verlaufen.

5. Vorrichtung nach einem der vorhergehenden Ansprüche,
**dadurch gekennzeichnet,**
**dass** die Führung (8) zur Horizontalen (H) 30° - 50° geneigt ist.

6. Vorrichtung nach einem der vorhergehenden Ansprüche,
**dadurch gekennzeichnet,**
**dass** mindestens ein Sensorelement vorgesehen ist, das beide Positionen (3, 4) der Kameraeinheit (40) erkennt.

7. Vorrichtung nach einem der vorhergehenden Ansprüche,
**dadurch gekennzeichnet,**
**dass** der untere Randbereich (33) des Schutzelementes (30) in der Offenstellung (2) derart positioniert ist, dass von der Mittelachse (42) der Kameraeinheit (40) bis zum genannten Randbereich (33) ein Erfassungswinkel α vorliegt, der bis zu 40°, vorzugsweise bis zu 50° beträgt.

8. Vorrichtung nach einem der vorhergehenden Ansprüche,
**dadurch gekennzeichnet,**
**dass** der zweite Arm (12) kürzer als der erste Arm (11) ausgeführt ist und/oder der erste Arm (11) und der zweite Arm (12) ein gemeinsames monolithisches Bauteil (11,12) bilden.

9. Vorrichtung nach einem der vorhergehenden Ansprüche,
**dadurch gekennzeichnet,**
**dass** das Schwenkelement (10) einen ersten Angriffspunkt (31) am Schutzelement (30) aufweist und das Hebelelement (20) einen zweiten Angriffspunkt (32) am Schutzelement (30) aufweist, wobei insbesondere der Abstand zwischen der ersten Drehachse (13) und der zweiten Drehachse (23) nahezu dem Abstand zwischen dem ersten Angriffspunkt (31) und dem zweiten Angriffspunkt (32) entspricht.

10. Vorrichtung nach einem der vorhergehenden Ansprüche,
**dadurch gekennzeichnet,**
**dass** das Gehäuse (7) einen Anschlag (9) aufweist, den das Hebelelement (20) und/oder das Schwenkelement (10) in der aktiven Position (4) und/oder in der Ruheposition der Kameraeinheit (40) kontaktiert.

11. Vorrichtung nach einem der vorhergehenden Ansprüche,
**dadurch gekennzeichnet,**
**dass** der Mechanismus derart ausgeführt ist, dass in der Offenstellung (2) des Schutzelementes (30) der Abstand zwischen dem Schutzelement (30) und der Karosserie (51) kleiner ist als der Verfahrweg (S) des Schutzelementes (30), den das Schutzelement (30) während der Bewegung von der Schließstellung (1) in die Offenstellung (2) senkrecht zur Horizontalen (H) ausführt.

12. Vorrichtung nach einem der vorhergehenden Ansprüche,
**dadurch gekennzeichnet,**
**dass** der erste Arm (11) ein Langloch (14) aufweist, an dem die Kameraeinheit (40) gelagert ist.

13. Vorrichtung nach einem der vorhergehenden Ansprüche,
**dadurch gekennzeichnet,**
**dass** der Mechanismus selbsthemmend ausgeführt ist, so dass trotz über eine potentielle Kraftbeaufschlagung auf das Schutzelement (30) eine Bewegung des Schwenkelementes (10) und/oder des Hebelelementes (20) blockiert ist.

14. Vorrichtung nach einem der vorhergehenden Ansprüche,
**dadurch gekennzeichnet,**
**dass** der Antrieb (50) am Mechanismus angreift, wobei der Antrieb (50) ein Linearantrieb und/oder ein Rotationsantrieb ist.

15. Vorrichtung nach einem der vorhergehenden Ansprüche,
**dadurch gekennzeichnet,**
**dass** das Schutzelement (30) außenseitig ein Designelement und/oder ein Emblem (34) aufweist.

## Claims

1. A device with a camera unit (40) used for image capture of the external area (5) of a motor vehicle, with
a drive (50) used for moving the camera unit (40) between a rest position (3) and an active position (4) and for moving a protective element (30) between a closed position (1) and an open position (2), wherein
in the closed position (1) of the protective element (30) the camera unit (40), in its rest position (3), is situated inaccessible from outside behind the protective element (30) and in the open position (2) of the protective element (30) the camera unit (40) is in the active position (4) for image capture, wherein
a mechanism with a swivel element (10) and a lever element (20) is provided,
the swivel element (10) is movably mounted about a first rotary axis (13) and comprises a first arm (11) and a second arm (2),
the first arm (11) engages on the camera unit (40) and the second arm (12) engages on the protective element (30),
the lever element (20) movably mounted about a second rotary axis (23) is in operative connection with the protective element (30), in order to support the movement of the protective element (30), and wherein
the second arm (12) is angled relative to the first arm (11) such that a compact motion curve of the protective element (30) can be achieved between its positions (1, 2).

2. The device according to claim 1, **characterised in that** the mechanism with the camera unit (40) is located within an indentation (6) of a housing (7) and/or the camera unit (40) performs a linear movement between the rest position (3) and the active position (4).

3. The device according to claim 2, **characterised in that** the housing (7) within the indentation (6) comprises a guidance (8) in which the camera unit (40) is slidably mounted, in particular the camera unit (40) comprises a slide element (41) which is movably received in the guidance (8).

4. The device according to one of the preceding claims, **characterised in that** the second arm (12) and the lever element (20) are aligned in almost the same direction, in particular the second arm (12) and the lever element (20) extend almost in parallel.

5. The device according to one of the preceding claims, **characterised in that** the guidance (8) is inclined between 30° and 50° to the horizontal (H).

6. The device according to one of the preceding claims, **characterised in that** at least one sensor element is provided which recognises both positions (3, 4) of the camera unit (40).

7. The device according to one of the preceding claims, **characterised in that** the lower edge area (33) of the protective element (30), in the open position (2), is positioned such that there exists a recording angle α from the centre axis (42) of the camera unit (40) up to the said edge area (33), which up to 40°, preferably up to 50° in size.

8. The device according to one of the preceding claims, **characterised in that** the second arm (12) is designed to be shorter than the first arm (11) and/or the first arm (11) and the second arm (12) together form one monolithic component (11, 12).

9. The device according to one of the preceding claims, **characterised in that** the swivel element (10) comprises a first working point (31) on the protective element (30) and the lever element (20) comprises a second working point (32) on the protective element (30), wherein in particular the distance between the first rotary axis (13) and the second rotary axis (23) corresponds to practically the distance between the first working point (31) and the second working point (32).

10. The device according to one of the preceding claims, **characterised in that** the housing (7) comprises a stop (9) which is contacted by the lever element (20) and in the rest position of the camera unit (40).

11. The device according to one of the preceding claims, **characterised in that** the mechanism is configured such that in the open position (2) of the protective element (30) the distance between the protective element (30) and the body work (51) is smaller than the motion path (S) of the protective element (30), along which the protective element (30) travels while moving from the closed position (1) into the open position (2), vertically to the horizontal (H).

12. The device according to one of the preceding claims, **characterised in that** the first arm (11) comprises an oblong hole (14) on which the camera unit (40) is mounted.

13. The device according to one of the preceding claims, **characterised in that** the mechanism is configured so as to be self-inhibiting so that a movement of the swivel element (10) and/or the lever element (20) is blocked via a force potentially acting upon the protective element (30).

14. The device according to one of the preceding claims, **characterised in that** the drive (50) engages on the mechanism, wherein the drive (50) is a linear drive and/or a rotational drive.

15. The device according to one of the preceding claims, **characterised in that** the protective element (30) has a design element and/or an emblem (34) on the outside.

## Revendications

1. Dispositif avec un ensemble caméra (40) qui sert à la saisie d'images de la zone extérieure (5) d'un véhicule avec
un système d'entraînement (50) qui sert au déplacement de l'ensemble caméra (40) entre une position de repos (3) et une position active (4) et au déplacement d'un élément de protection (30) entre une position de fermeture (1) et une position d'ouverture (2), pour lequel
dans la position de fermeture (1) de l'élément de protection (30), l'ensemble caméra (40) se trouve dans sa position de repos (3) derrière l'élément de protection (30) inaccessible de l'extérieur et l'ensemble caméra se trouve dans la position d'ouverture (2) de l'élément de protection (30)dans la position active (4) pour la saisie d'images, pour lequel
un mécanisme avec un élément pivotant (10) et un élément de levage (20) est prévu,
l'élément pivotant (10) étant monté mobile autour d'un axe de rotation (13) et comporte un premier bras (11) et un deuxième bras (12),
le premier bras (11) se mettent en prise sur l'ensemble caméra (40) et le deuxième bras (12) sur l'élément de protection (30),
l'élément de levage (20) monté mobile autour d'un deuxième axe de rotation (23) étant en liaison active avec l'élément de protection (30) pour assister le déplacement de l'élément de protection (30), pour lequel
le deuxième bras est plié vers le premier bras (11) de telle sorte qu'une courbe de déplacement compacte de l'élément de protection (30) peut être obtenue entre ses positions (1, 2)..

2. Dispositif selon la revendication 1 **caractérisé en ce que** le mécanisme avec l'ensemble caméra (40) se trouve à l'intérieur d'un bossage (6) d'un boîtier (7) et/ou l'ensemble caméra (40) effectue un mouvement linéaire entre la position de repos (3) et la position active (4).

3. Dispositif selon la revendication 2 **caractérisé en ce que** le boîtier (7) comporte à l'intérieur du bossage (6) un guidage (8) dans lequel l'ensemble caméra (40) est monté déplaçable, l'ensemble caméra comportant en particulier un élément coulissant (41) qui est réceptionné de façon mobile dans le guidage (8).

4. Dispositif selon une quelconque des revendications précédentes **caractérisé en ce que** le deuxième bras (12) et l'élément de levage (20) sont orientés de façon presque identique, le deuxième bras (12) et l'élément de levage (20) se déplaçant de façon presque parallèle.

5. Dispositif selon une quelconque des revendications précédentes **caractérisé en ce que** le guidage (8) est incliné de 30 - 50° par rapport au niveau horizontal (H).

6. Dispositif selon une quelconque des revendications précédentes **caractérisé en ce qu'**au moins un élément capteur est prévu qui identifie les deux positions (3, 4) de l'ensemble caméra (40).

7. Dispositif selon une quelconque des revendications précédentes **caractérisé en ce que** la zone de bordure (33) inférieure de l'élément de protection (30) est positionnée dans la position d'ouverture (2) de telle sorte qu'il y a un angle de saisie α de l'axe central (42) de l'ensemble caméra (40) jusqu'à la zone de bordure (33) citée qui va jusqu'à 40°, de préférence jusqu'à 50°.

8. Dispositif selon une quelconque des revendications précédentes **caractérisé en ce que** le deuxième bras (12) est réalisé plus court que le premier bras (11) et/ou le premier bras (11) et le deuxième bras (12) forment un composant (11, 12) monolithique commun.

9. Dispositif selon une quelconque des revendications précédentes **caractérisé en ce que** l'élément pivotant (10) comporte un premier point de prise (31) sur l'élément de protection (30) et l'élément de levage (20) comporte une deuxième point de prise (32) sur l'élément de protection (30), pour lequel en particulier l'espace entre le premier axe de rotation (13) et le deuxième axe de rotation (23) correspond sensiblement à l'espace entre le premier point de prise (31) et le deuxième point de prise (32).

10. Dispositif selon une quelconque des revendications précédentes **caractérisé en ce que** le boîtier (7) comporte une butée (9) qui est en contact avec l'élément de levage (20) et/ou l'élément pivotant (10) dans la position active (4) et/ou dans la position de repos de l'ensemble caméra (40).

11. Dispositif selon une quelconque des revendications précédentes **caractérisé en ce que** le mécanisme est réalisé de telle sorte que dans la position d'ouverture (2) de l'élément de protection (30), l'espace entre l'élément de protection (30) et la carrosserie (51) est plus petit que la course de (S) de l'élément de protection (30) que l'élément de protection (30) parcourt perpendiculairement à l'horizontale (H, pendant le déplacement de la position de fermeture (1) à la position d'ouverture (2).

12. Dispositif selon une quelconque des revendications précédentes **caractérisé en ce que** le premier bras (11) comporte un trou oblong (14) dans lequel est monté l'ensemble caméra (40).

13. Dispositif selon une quelconque des revendications précédentes **caractérisé en ce que** le mécanisme est réalisé autobloquant de sorte qu'un déplacement de l'élément pivotant (10) et/ou de l'élément de levage (20) est bloqué malgré une application de force potentielle sur l'élément de protection (30).

14. Dispositif selon une quelconque des revendications précédentes **caractérisé en ce que** le système d'entraînement (50) se met en prise sur le mécanisme, le système d'entraînement (50) étant un entraînement linéaire et/ou un entraînement par rotation.

15. Dispositif selon une quelconque des revendications précédentes **caractérisé en ce que** l'élément de protection (30) comporte à l'extérieur un élément de style et/ou un emblème (34).
